# EUROPEAN PATENT APPLICATION

(11) **EP 2 355 470 A1**
(43) Date of publication of application: **10.08.2011**
(21) Application number: 10183085.9
(22) Date of filing: 30.09.2010
(51) Int. Cl.: H04M 1/725

(54) **Mobile terminal and communication method using the same**

(30) Priority: 29.01.2010 KR 20100008450
(71) Applicant: PANTECH CO., LTD., Seoul 121-792 (KR)
(72) Inventor: Lee, Yang Lyul, 138-790, Seoul (KR); Kim, Chang Hun, 122-924, Seoul (KR); Shin, Jin Woo, 121-807, Seoul (KR); Jeon, Hyeon Ji, 120-788, Seoul (KR); Jeung, Seung Min, 156-030, Seoul (KR)
(74) Representative: Herzog, Markus

(57) **Abstract**

Mobile terminals and a communication method using the same in which a mobile terminal includes a display unit to display image information processed in the mobile terminal; a conversion unit to convert an image signal corresponding to the image information output from the display unit into an electric signal; and an electrical output unit to output the electric signal converted by the conversion unit. Further, a mobile terminal includes an electrical reception unit to receive an electric signal for image information; a conversion unit to convert the electric signal received by the electrical reception unit into an image signal; and a display unit to display image information corresponding to the image signal converted by the conversion unit.

## Description

### CROSS-REFERENCE TO RELATED APPLICATION

This application claims priority from and the benefit of Korean Patent Application No. 10-2010-0008450, filed on January 29, 2010, which is hereby incorporated by reference for all purposes as if fully set forth herein.

### BACKGROUND

1. Field

The disclosure relates to a mobile terminal to transmit image information using electric signals with another mobile terminal and a communication method using the same.

2. Discussion of the Background

As telecommunication technologies and infrastructures have improved, mobile terminals have been developed to provide not only general voice communications but also various services, such as game, message transmission/reception, Internet search, wireless data communication, electronic note, digital camera, and video telephony.

Recently, as users' requests for services are increased and the services are highly functionalized, attempts have been made to enhance users' convenience by introducing a graphic user interface (GUI) similar to a personal computer (PC) or a touch panel in a mobile terminal.

Data may be transmitted between mobile terminals using a protocol, such as Bluetooth®. Bluetooth® is an industrial specification for wireless personal area networks (PANs)formalized by the Bluetooth® Special Interest Group (SIG). However, the speed of transmission through Bluetooth® is relatively low, and a certification procedure called as "pairing" is followed for security. Because radio waves are used in Bluetooth®, data may be received or stolen by an unauthorized person located in the vicinity of the radio waves.

### SUMMARY

Exemplary embodiments of the present invention provide mobile terminals that transmit image information using electric signals therebetween and a communication method using the same.

Additional features of the invention will be set forth in the description which follows, and in part will be apparent from the description, or may be learned by practice of the invention.

An exemplary embodiment provides a mobile terminal including a display unit to display image information processed in the mobile terminal; a conversion unit to convert an image signal corresponding to the image information displayed on the display unit into an electric signal; and an electrical output unit to output the electric signal converted by the conversion unit.

An exemplary embodiment provides a mobile terminal including an electrical reception unit to receive an electric signal corresponding to image information; a conversion unit to convert the electric signal received by the electrical reception unit into an image signal; and a display unit to display image information corresponding to the image signal converted by the conversion unit.

An exemplary embodiment provides a communication method for a mobile terminal, the method including displaying image information processed in the mobile terminal; converting an image signal corresponding to the displayed image information into an electric signal; and outputting the converted electric signal from a capacitive touch panel of the mobile terminal.

An exemplary embodiment provides a communication method for a mobile terminal, the method including receiving, in a capacitive reception unit of the mobile terminal, an external electric signal corresponding to image information from the other mobile terminal; converting the received electric signal into an image signal; and outputting displaying image information corresponding to the converted image signal.

An exemplary embodiment provides In another embodiment, there is provided a mobile terminal including a display unit to display first image information and second image information; a conversion unit to convert a first image signal corresponding to the first image information displayed on the display unit into a first electric signal and to convert a second electric signal corresponding to the second image information into a second image signal; an electrical output unit to output the first electric signal converted by the conversion unit; and an electrical reception unit to receive the second electric signal corresponding to the second image information.

An exemplary embodiment provides a communication method for mobile terminals, the method including displaying image information processed in a first mobile terminal; converting a first image signal corresponding to the displayed image information into an electric signal in the first mobile terminal; outputting, from the first mobile terminal, the converted electric signal to an electrical reception unit of a second mobile terminal; receiving the converted electric signal for image information in the second mobile terminal; converting the received electric signal into a second image signal in the second mobile terminal; and displaying image information in the second mobile terminal corresponding to the second image signal.

It is to be understood that both the foregoing general description and the following detailed description are exemplary and explanatory and are intended to provide further explanation of the invention as claimed. Other features and aspects will be apparent from the following detailed description, the drawings, and the claims.

### BRIEF DESCRIPTION OF THE DRAWINGS

The accompanying drawings, which are included to provide a further understanding of the invention and are incorporated in and constitute a part of this specification, illustrate embodiments of the invention, and together with the description serve to explain the principles of the invention.

FIG. 1 illustrates a configuration of mobile terminals that communicate with each other according to an exemplary embodiment.

FIG. 2 is illustrates a method for communicating data using mobile terminals according to an exemplary embodiment.

FIG. 3 illustrates a method for communicating image information using mobile terminals according to an exemplary embodiment.

FIG. 4 illustrates a method for transmitting data using a mobile terminal according to an exemplary embodiment.

FIG. 5 illustrates a method for receiving data using a mobile terminal according to an exemplary embodiment.

### DETAILED DESCRIPTION OF THE ILLUSTRATED EMBODIMENTS

The invention is described more fully hereinafter with reference to the accompanying drawings, in which exemplary embodiments of the invention are shown. This invention may, however, be embodied in many different forms and should not be construed as limited to the embodiments set forth herein. Rather, these exemplary embodiments are provided so that this disclosure is thorough, and will fully convey the scope of the invention to those skilled in the art. In the drawings, the size and relative sizes of layers and regions may be exaggerated for clarity. Like reference numerals in the drawings denote like elements.

The terminology used herein is for the purpose of describing particular embodiments only and is not intended to be limiting of this disclosure. As used herein, the singular forms "a", "an", and "the" are intended to include the plural forms as well, unless the context clearly indicates otherwise. Furthermore, the use of the terms "a", "an", etc. does not denote a limitation of quantity, but rather denotes the presence of at least one of the referenced item. The use of the terms "first", "second", and the like does not imply any particular order, but they are included to identify individual elements. Moreover, the use of the terms "first", "second", etc. does not denote any order or importance, but rather the terms first, second, etc. are used to distinguish one element from another. It will be further understood that the terms "comprises" and/or "comprising", or "includes" and/or "including" when used in this specification, specify the presence of stated features, regions, integers, steps, operations, elements, and/or components, but do not preclude the presence or addition of one or more other features, regions, integers, steps, operations, elements, components, and/or groups thereof.

Unless otherwise defined, all terms (including technical and scientific terms) used herein have the same meaning as commonly understood by one of ordinary skill in the art. It will be further understood that terms, such as those defined in commonly used dictionaries, should be interpreted as having a meaning that is consistent with their meaning in the context of the relevant art and the present disclosure, and will not be interpreted in an idealized or overly formal sense unless expressly so defined herein.

Mobile terminals described in this specification may include various types of terminals, such as mobile phones, smart phones, laptop computers, digital broadcasting terminals, personal digital assistants (PDAs), portable multimedia players (PMPs), and portable navigators able to operate in conjunction with a global positioning system (GPS). It will be apparent that the configuration of mobile terminals described in this specification may be applied to fixed terminals, such as digital TVs and desktop computers.

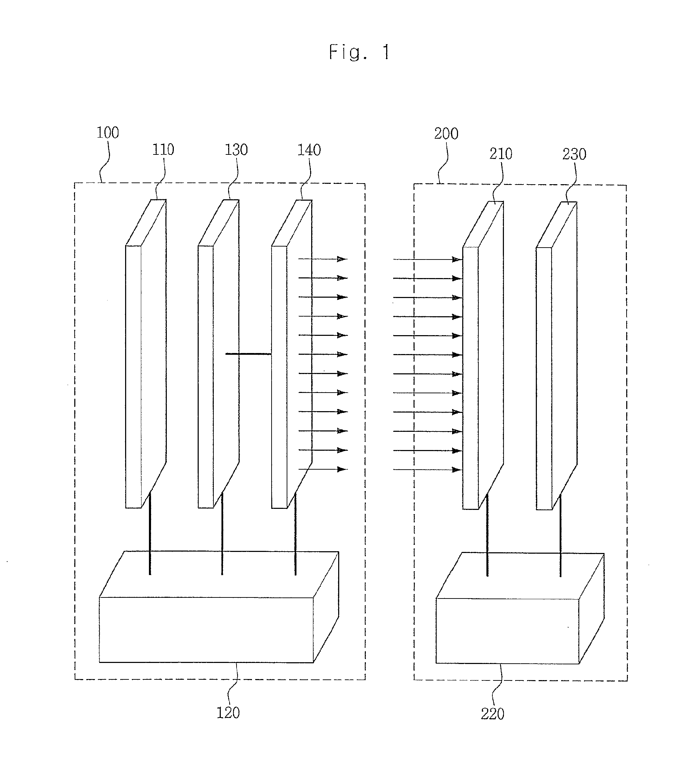

FIG. 1 illustrates a configuration of mobile terminals that communicate with each other according to an exemplary embodiment. Referring to FIG. 1, a first mobile terminal 100 to transmit and a second mobile terminal 200 to receive are illustrated in FIG. 1. Although described as transmission between the first and second mobile terminals 100 and 200, aspects are not limited thereto such that transmission may be between other devices, such as a mobile terminal and a fixed terminal. Further, although the drawings illustrate the first and second mobile terminals 100 and 200 as being a same size, aspects are not limited thereto such that the first and second mobile terminals 100 and 200 may be of different sizes and have displays of different resolutions.

The first mobile terminal 100 to transmit includes a display unit 110, a conversion unit 120, an electrical output unit 130, and a touch panel unit 140.

The display unit 110 displays or outputs image information processed in the first mobile terminal 100. That is, the display unit 110 displays image information processed in the first mobile terminal 100 using a user interface and a graphical user interface. The display unit 110 may include at least one of a liquid crystal display (LCD), a thin film transistor LCD (TFT-LCD), an organic light emitting diode (OLED), a flexible display, and a three-dimensional display.

The conversion unit 120 converts an image signal corresponding to the image information output from the display unit 110 into an electric signal. Specifically, the conversion unit 120 receives red, blue, and green (RGB) image signals and analyzes the received RGB image signals to convert the RGB image signals into different electric signals based on the kind of RGB image signal for each pixel. In order to distinguish the kind of electric signal, the conversion unit 120 may convert image signals for pixels into electric signals having differences in capacitance or differences in voltage. When the conversion unit 120 converts RGB image signals for pixels into electric signals, it may convert an RGB image signal for a pixel into an electric signal.

Alternatively, the conversion unit 120 may specify the RGB image signals for one or more pixels as an image signal for a group of pixels and convert the image signal for the group of pixels into one or more electric signals. For example, the conversion unit 120 converts an image signal for a 3x3 group of pixels into nine electric signals, so that the electric signals for the nine pixels can be controlled to be simultaneously transmitted to the second mobile terminal 200. The electric signals for the nine pixels may be transmitted using a specific protocol. In the specific protocol, a group pixel may be sequentially specified by searching pixels in the order of left to right in a first row of the 3x3 group of pixels, and electric signals may be generated according to the order. The specific protocol may include various protocols according to various applications. The conversion unit 120 may control the quantity of data transmitted by converting image signals corresponding to whole or complete image information or a part of the image information displayed on the display unit 110 into electric signals under the user's control.

The electrical output unit 130 outputs electric signals converted by the conversion unit 120 to the second mobile terminal 200. Specifically, the electrical output unit 130 outputs the generated different electric signals based on the image signals for pixels output from the conversion unit 120. The electric signals output from the electrical output unit 130 may be applied to various functions including a function of transmitting or copying photographs, name cards, specific images or the like, an electronic stamping function performed through contact using a stamping method, a health care application, a user authentication, and the like.

The touch panel unit 140 displays the image information output from the display unit 110. The touch panel unit 140 receives a touch signal input by a user and transmits it to the conversion unit 120. Thus, the touch panel unit 140 receives a touch signal input to the mobile terminal 100 and transmits the touch signal to the conversion unit 120 so that the conversion unit 120 may convert an image signal into an electric signal. The touch panel unit 140 may be disposed in a layer structure with the display unit 110. The layer structure of the touch panel unit 140 and the display unit 110 may be an interlayer structure. The touch panel unit 140 may be a capacitive touch panel, but aspects are not limited thereto.

The second mobile terminal 200 includes an electrical reception unit 210, a conversion unit 220, and a display unit 230.

The electrical reception unit 210 receives an electric signal, for example, an image information signal. The electrical reception unit 210 may include a touch panel, and the touch panel may receive an electric signal based on the change in capacitance applied to a specific part thereof.

The conversion unit 220 converts the electric signal received by the electrical reception unit 210 into an image signal. Specifically, the conversion unit 220 converts the received electric signal into an RGB image signal for each pixel determined based on the kind of electric signal distinguished with capacitance or voltage. That is, the conversion unit 220 analyzes electric signals having different values based on the kind of RGB image signal for each pixel and calculates an RGB signal value corresponding to the received electric signal. Thus, the conversion unit 220 may convert the calculated RGB signal value into an RGB pixel value.

Alternatively, the conversion unit 220 may converts an electric signal distinguished based on the value of the capacitance or voltage of the received electric signal into a digital signal and generates an RGB image signal corresponding to the digital signal. For example, the conversion unit 220 generates a digital signal such as 0100 or O111 based on the value of the capacitance of the input electric signal and calculates an RGB signal value as according to the digital value. Thus, the conversion unit 220 may convert the received electric signal into an RGB signal based on the calculated RGB signal value. If the electric signal received by the electrical reception unit 210 is an electric signal for a group of pixels including one or more pixels, the conversion unit 220 may convert the electric signal into an RGB image signal for the group pixel including one or more pixels and provide the converted RGB image signals to individual pixels using a specific protocol. For example, when the conversion unit 220 converts the electric signal into RGB image signals for a 3x3 group of pixels, the nine converted RGB image signals may be sequentially provided to the respective pixels in an order of left to right on a first row of the 3x3 group of pixels. The specific protocol corresponds to the protocol determined when the electric signal for the group of pixels is converted by the conversion unit 120 in the first mobile terminal 100. According to settings, information on the specific protocol may be transmitted together with the electric signal to the second mobile terminal 200 or may be stored in the second mobile terminal 200.

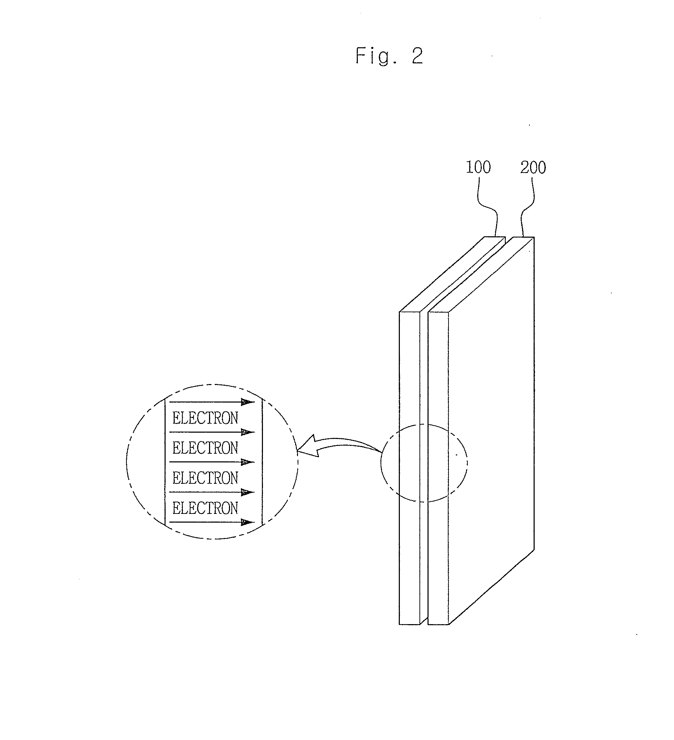

FIG. 2 illustrates a method for communicating data using mobile terminals according to an exemplary embodiment. Referring to FIG. 2, if the first mobile terminal 100 and the second mobile terminal 200 come in contact with each other or are disposed in a range in which electric charges can be moved, image information displayed in the first mobile terminal 100 is converted into electrons of an electric signal, and the electrons of the electric signal are provided to the second mobile terminal 200. The electric signal received by the second mobile terminal 200 is converted into an image signal, thereby displaying the image information from the first mobile terminal 100 in the second mobile terminal 200. The accuracy of the communication of the image information can be increased by controlling the intensity of the electric signal output from the first mobile terminal 100, the reception rate in the first mobile terminal 100, the communication environment, the distance between the first mobile terminal 100 and the second mobile terminal 200, or the like. Data transmitted from the first mobile terminal 100 to the second mobile terminal 200 may include various types of data including image information, voice information, and the like.

The first mobile terminal 100 and the second mobile terminal 200 may be homogeneous mobile terminals or heterogeneous mobile terminals.

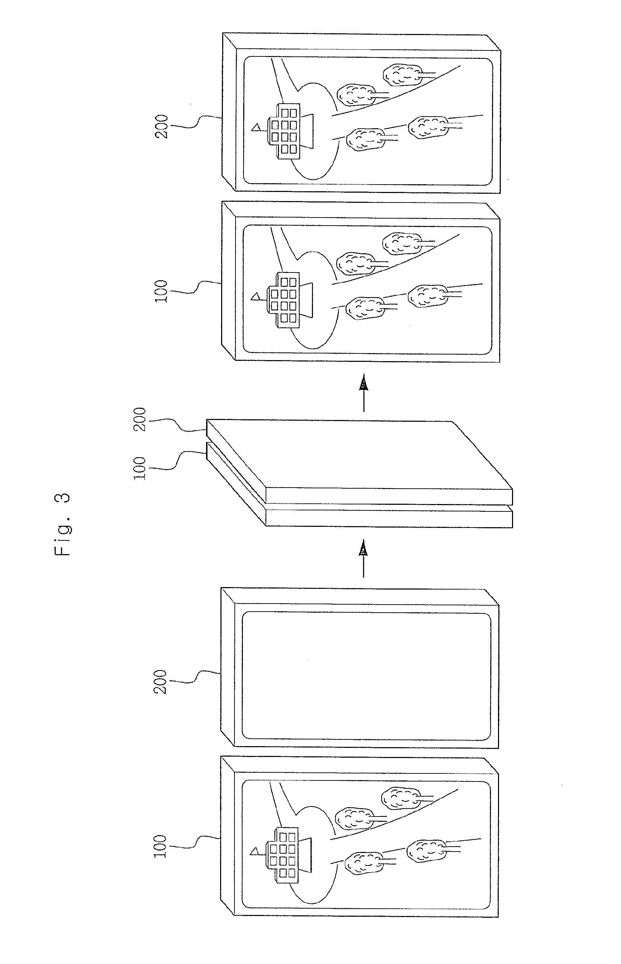

FIG. 3 illustrates a method for communicating image information using mobile terminals according to an exemplary embodiment. Referring to FIG. 3, image information displayed in the first mobile terminal 100 is converted into an electric signal in the first mobile terminal 100. If the first mobile terminal 100 and the second mobile terminal 200 are disposed in a range in which they can communicate with each other, the electric signal converted in the first mobile terminal 100 is transmitted to the second mobile terminal 200. The electric signal received by the second mobile terminal 200 is converted into an image signal, thus the second mobile terminal 100 displays image information identical to the image information displayed in the first mobile terminal 100. Through the process described above, a JPEG file photographed by or stored in the first mobile terminal 100 is converted into an electric signal and then transmitted to the second mobile terminal 200. Thus, a JPEG file identical to that photographed by or stored in the first mobile terminal 100 can also be displayed in the second mobile terminal 200.

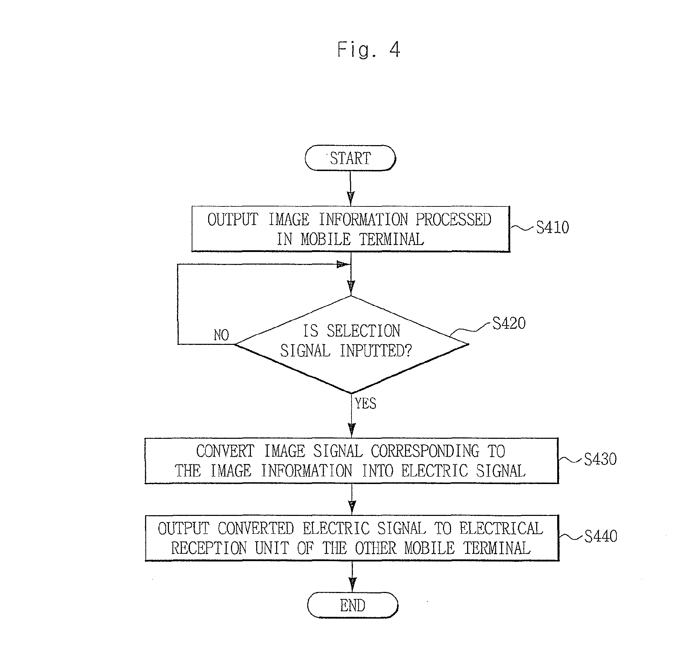

FIG. 4 illustrates a method for transmitting data using a mobile terminal according to an exemplary embodiment. Referring to FIG. 4, image information processed in a first mobile terminal is output or displayed (S410). If selection signal is input to the first mobile terminal (S420), the first mobile terminal converts an image signal corresponding to the image information output therefrom or displayed thereon into an electric signal (S430). The first mobile terminal outputs the converted electric signal to an electrical reception unit of a second mobile terminal so that the output electric signal is transmitted to the second mobile terminal (S440).

The image signal may include RGB image signals for individual pixels. The converting may include converting the image signal into electric signals having different capacitances or voltages based on the kind of RGB image signal. The converting may further include specifying RGB image signals for one or more pixels as a group signal and converting the group signal into one or more electric signals.

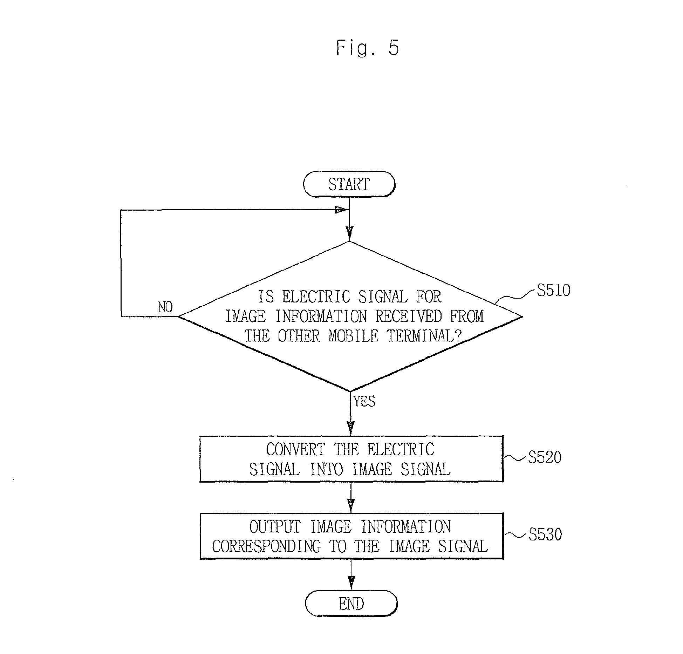

FIG. 5 illustrates a method for receiving data using a mobile terminal according to an exemplary embodiment. Referring to FIG. 5, if an electric signal for image information is received by a first mobile terminal from a second mobile terminal (S510), the received electric signal is converted into an image signal (S520), and image information corresponding to the converted image signal is output or displayed by the first mobile terminal (S530).

The converting may include converting the received electric signal into an RGB image signal for each pixel, of which kind is determined based on the difference in the capacitance or voltage of the received electric signal. The converting may further include converting the received electric signal into an RGB image signal and, if the converted RGB image signal is an RGB image signal for a group of pixels, providing RGB image signals converted using a specific protocol to individual pixels included in the group of pixels.

The mobile terminals and the communication method using the same, described above, are not limited to the configurations and methods of the aforementioned exemplary embodiments. That is, the exemplary embodiments may be configured by selectively combining the whole or a part of each of the embodiments so that various modifications and changes can be made thereto.

In mobile terminals and a communication method using the same according to at least one embodiment, data transmission is performed through the output of electric signals, so that data can be transmitted without using a wireless communication protocol.

It will be apparent to those skilled in the art that various modifications and variation can be made in the present invention without departing from the spirit or scope of the invention. Thus, it is intended that the present invention cover the modifications and variations of this invention provided they come within the scope of the appended claims and their equivalents.
Mobile terminals and a communication method using the same in which a mobile terminal includes a display unit to display image information processed in the mobile terminal; a conversion unit to convert an image signal corresponding to the image information output from the display unit into an electric signal; and an electrical output unit to output the electric signal converted by the conversion unit. Further, a mobile terminal includes an electrical reception unit to receive an electric signal for image information; a conversion unit to convert the electric signal received by the electrical reception unit into an image signal; and a display unit to display image information corresponding to the image signal converted by the conversion unit.

## Claims

1. A mobile terminal, comprising:
a display unit to display image information processed in the mobile terminal;
a conversion unit to convert an image signal corresponding to the image information displayed on the display unit into an electric signal; and
an electrical output unit to output the electric signal converted by the conversion unit.

2. The mobile terminal of claim 1, wherein the image signal includes red, green, and blue signals (RGB signals) for individual pixels, and the conversion unit converts the image signal into electric signals having differences in capacitance and/or voltage according to a kind of the RGB signals..

3. The mobile terminal of claim 1 or 2, wherein the conversion unit determines the image signals for one or more pixels as a group signal, and coverts the group signal into one or more electric signals corresponding to the group signal.

4. The mobile terminal of any of claims 1 to 3, further comprising a touch panel unit disposed in a layer structure with the display unit to display the image information output from the display unit and to provide an input touch signal to the conversion unit, wherein, if the touch signal is provided from the touch panel unit to the conversion unit, the conversion unit converts the image signal corresponding to the image information output from the display unit into an electric signal,
and, preferably, the conversion unit converting an image signal corresponding to a part of the image information output from the display unit into an electric signal based on the touch signal input by the user.

5. A mobile terminal, comprising:
an electrical reception unit to receive an electric signal corresponding to image information;
a conversion unit to convert the electric signal received by the electrical reception unit into an image signal; and
a display unit to display image information corresponding to the image signal converted by the conversion unit.

6. The mobile terminal of claim 5, wherein the electrical reception unit includes a touch panel to receive an electric signal based on a change in capacitance.

7. The mobile terminal of claim 5 or 6, wherein the conversion unit converts the received electric signal into a red, blue, and green image signal (RGB image signal) for each pixel, and a kind of the RGB image signal is determined according to a difference in capacitance and/or voltage of the received electric signal.

8. The mobile terminal of any of claims 5 to 7, wherein, if the image signal into which the received electric signal is converted is an image signal for a group of pixels including one or more pixels, the conversion unit provides the image signals converted using a specific protocol to the individual pixels included in the group of pixels.

9. The mobile terminal of any of claims 5 to 8, wherein the conversion unit converts the received electric signal into different digital signals according to a value of a capacitance or a voltage of the received electric signal, and generates image signals corresponding to the digital signals.

10. A communication method for a mobile terminal, comprising:
displaying image information processed in the mobile terminal;
converting an image signal corresponding to the displayed image information into an electric signal; and
outputting the converted electric signal from a capacitive touch panel of the mobile terminal.

11. The communication method of claim 10, wherein the image signal includes red, blue, and green image signals (RGB image signals) for individual pixels, and the converting comprises converting the image signal into electric signals having different capacitances and/or voltages according to a kind of the RGB image signals.

12. The communication method of claim 10 or 11, wherein the converting further comprises:
specifying image signals for one or more pixels as a group signal; and
converting the group signal into one or more electric signals.

13. A communication method for a mobile terminal, comprising:
receiving, in a capacitive reception unit of the mobile terminal, an external electric signal corresponding to image information;
converting the received electric signal into an image signal; and
displaying image information corresponding to the converted image signal.

14. The communication method of claim 13, wherein the converting comprises converting the received electric signal into a red, blue, and green image signal (RGB image signal) for each pixel, and a kind of the RGB image signal is determined based on a difference in the capacitance and/or voltage of the received electric signal.

15. The communication method of claim 13 or 14, wherein the converting further comprises:
converting the received electric signal into an image signal; and
if the converted image signal is an image signal for a group pixel, providing image signals converted using a specific protocol to individual pixels included in the group of pixels.

16. A mobile terminal, comprising:
a display unit to display first image information and second image information;
a conversion unit to convert a first image signal corresponding to the first image information displayed on the display unit into a first electric signal and to convert a second electric signal corresponding to the second image information into a second image signal;
an electrical output unit to output the first electric signal converted by the conversion unit; and
an electrical reception unit to receive the second electric signal corresponding to the second image information.

17. A communication method for mobile terminals, the method comprising:
displaying image information processed in a first mobile terminal;
converting a first image signal corresponding to the displayed image information into an electric signal in the first mobile terminal;
outputting, from the first mobile terminal, the converted electric signal to an electrical reception unit of a second mobile terminal;
receiving the converted electric signal for image information in the second mobile terminal;
converting the received electric signal into a second image signal in the second mobile terminal; and
displaying image information in the second mobile terminal corresponding to the second image signal.
